# DEMANDE DE BREVET EUROPEEN

(11) **EP 1 588 930 A1**
(43) Date de publication de la demande: **26.10.2005**
(21) Numéro de dépôt: 05290858.9
(22) Date de dépôt: 18.04.2005
(51) Int. Cl.: B62H 5/00, B62H 5/20, B62H 3/00, B62M 23/02

(54) **Véhicule électrique, système de gestion de parc, carte à puce, procédé de gestion de parc et programme d'ordinateur**

(30) Priorité: 22.04.2004 FR 0404284
(71) Demandeur: JJG Partenaires Eurl, 68190 Ensisheim (FR)
(72) Inventeur: Martin, Gilles, 68390 Sausheim (FR); Gaechter, Jean-Jacques, 68100 Mulhouse (FR)
(74) Mandataire: Burbaud, Eric

(57) **Abrégé**

Un véhicule électrique comprend au moins un mécanisme électrique contribuant au déplacement du véhicule et un circuit électronique de commande commandant le mécanisme électrique.

Le circuit de commande est amovible.

## Description

La présente invention est relative aux véhicules électriques.

Plus particulièrement, l'invention concerne un véhicule électrique comprenant au moins un mécanisme électrique contribuant au déplacement du véhicule et un circuit électronique de commande adapté pour commander au moins ledit mécanisme électrique.

De tels véhicules électriques, tels que par exemple des vélos électriques, comprenant un dispositif d'assistance électrique commandé par un circuit de commande mettant en oeuvre un certain nombre de fonctions, sont connus. Généralement, le circuit électronique de puissance (faisant fonctionner le dispositif électrique) et le circuit de commande (contrôlant le circuit de puissance et les autres fonctions éventuelles du vélo) sont intégrés dans le véhicule. On pourra par exemple se référer au brevet US 5,491,390 qui décrit un tel véhicule à assistance électrique et son électronique de puissance.

Ce genre de véhicules est très intéressant du fait que l'assistance électrique permet de rendre le vélo accessible au plus grand nombre, en particulier un public qui serait *prima facie* rebuté par l'utilisation d'une version classique d'un tel véhicule. En ville, l'utilisation du vélo pour remplacer l'automobile ne s'est pas encore vraiment développée à cause du problème que peut représenter pour les cyclistes potentiels le fait d'arriver en sueur au travail, par exemple. L'utilisation de vélos à assistance électrique permettrait de diminuer fortement la circulation automobile en ville et les nuisances en résultant (pollution, bruit, agressivité des usagers, ...).

Grâce à de telles performances, un tel véhicule à assistance électrique peut devenir un objet de convoitises pour des personnes mal intentionnées. Il faut donc prévoir des moyens de sécurité renforcés tels que des antivols à chaîne coûteux, qui ne peuvent d'ailleurs être fixés que dans certains endroits appropriés (lampadaires, grilles métalliques rigides, parcs appropriés, etc.).

EP 0985 596 décrit un exemple d'un tel véhicule, dans lequel une carte à puces comprenant une mémoire peut être insérée dans un lecteur de carte à puces pour autoriser le démarrage du véhicule. Cependant, aujourd'hui, il existe des moyens accessibles à des personnes mal intentionnées, de lire l'organisation d'une telle mémoire et de fabriquer une fausse carte présentant une mémoire du même type pour voler le véhicule.

La présente invention a notamment pour but de pallier ces inconvénients.

A cet effet, selon l'invention, un véhicule du genre en question est essentiellement caractérisé en ce que ledit circuit électronique de commande est amovible.

Grâce à ces dispositions, l'utilisateur souhaitant utiliser le véhicule n'a qu'à insérer le circuit de commande à l'endroit approprié. Après l'utilisation, il n'a qu'à retirer le circuit de commande, ce qui rend le véhicule totalement inutilisable par un tiers car le circuit de commande est le véritable cerveau d'un tel véhicule. Le véhicule ne peut pas être démarré, et donc pas volé. On peut même s'affranchir d'utiliser un antivol, et on peut « stationner » n'importe où.

En outre, il faudrait des moyens technologiques très poussés à une personne mal intentionnée pour reproduire un circuit électronique de commande.

Dans des modes de réalisation préférés de l'invention, on peut éventuellement avoir recours en outre à l'une et/ou à l'autre des dispositions suivantes :
- ledit circuit électronique de commande est porté par un dispositif électronique portatif comportant en outre un premier circuit de mémoire adapté pour stocker au moins une information relative audit véhicule et/ou à un utilisateur du véhicule ;
- le véhicule comprend en outre un deuxième circuit de mémoire adapté pour contenir des informations relatives au véhicule ;
- ledit circuit de commande comprend des moyens d'inscrire dans le premier circuit de mémoire, au moins une information stockée dans le deuxième circuit de mémoire ;
- ledit véhicule comporte un antivol, ledit antivol étant verrouillé en l'absence du circuit de commande, et le circuit de commande est adapté pour autoriser l'ouverture de l'antivol.

Selon un autre aspect, l'invention concerne un vélo pourvu d'un système d'assistance électrique.

Selon un autre aspect, l'invention concerne un système de gestion d'un parc de tels véhicules électriques comprenant :
au moins un véhicule électrique,
au moins un dispositif électronique portatif comprenant ledit circuit de commande adapté pour commander ledit véhicule électrique et ledit premier circuit de mémoire adapté pour stocker au moins une information relative audit véhicule et/ou à un utilisateur du véhicule, et
un système organisateur adapté pour lire ledit premier circuit de mémoire, et pour surveiller l'évolution dans le temps de ladite au moins une information.

Selon un mode de réalisation particulier, on peut mettre en oeuvre en outre la caractéristique suivante :
- le système de gestion comprend au moins un véhicule électrique, et comprend en outre un organe de transfert adapté pour transférer des informations contenues dans ledit deuxième circuit de mémoire vers ledit système organisateur.

Selon un autre aspect, l'invention concerne une carte à puce pour un tel véhicule ou pour un tel système de gestion, et contenant ledit circuit de commande.

Selon un autre aspect, l'invention concerne un procédé de gestion d'un tel parc de véhicules comprenant les étapes au cours desquelles :
(a)on lit, à l'aide du système organisateur, une information relative à un utilisateur ou à un véhicule contenue dans ladite première mémoire, et
(b)on surveille au moins un paramètre lié audit véhicule ou audit utilisateur au cours du temps.

Selon un autre aspect, l'invention concerne un programme d'ordinateur comprenant des portions de code de programme pour l'exécution d'au moins l'étape (b) d'un tel procédé lorsque ledit programme est exécuté par un ordinateur.

Selon un autre aspect, l'invention concerne un produit de programme d'ordinateur comprenant des portions de code de programme pour l'exécution d'au moins l'étape (b) d'un tel procédé lorsque ledit programme est exécuté par un ordinateur.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un vélo utilisable dans le cadre de l'invention,
- la figure 1a est un schéma bloc partiel de l'électronique du vélo de la figure 1,
- la figure 2 est une vue schématique représentant une carte à puce utilisable dans le cadre de l'invention,
- la figure 3 est une vue schématique en perspective représentant un local pouvant stocker les véhicules selon l'invention, et
- la figure 4 est une vue schématique représentative d'un écran de contrôle du parc.

Sur les différentes figures, les mêmes références désignent des éléments identiques ou similaires.

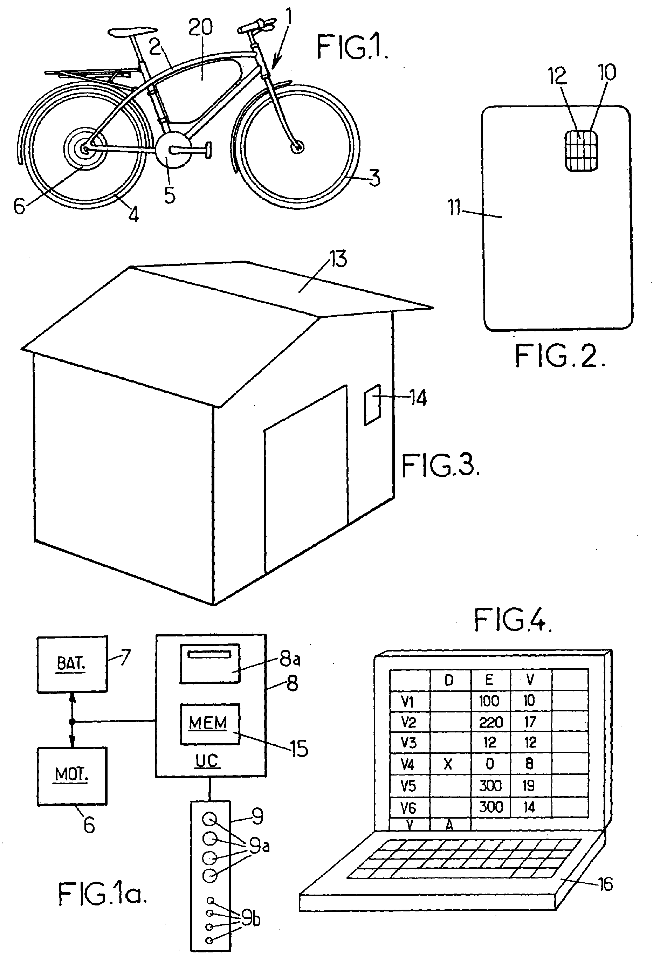

Les figures 1 et la représentent de manière schématique un véhicule électrique 1 tel qu'un vélo à assistance électrique, ou tout autre type de véhicule approprié. A ce titre, même si la présente invention est décrite par la suite en faisant référence à un vélo à assistance électrique, il va de soi que tout type de véhicule dont un mécanisme électrique contribue au déplacement pourra être aussi bien utilisé dans le cadre de l'invention (voiture électrique, scooter électrique, trottinette électrique, etc.).

Le vélo 1 peut typiquement se présenter sous la forme d'un vélo classique comprenant un cadre 2 sur lequel sont montées une roue avant 3 et une roue arrière 4 entraînée par un pédalier 5. Un moteur électrique 6 est disposé autour du moyeu de la roue arrière 4 et est commandé par une carte d'électronique de puissance, par exemple du type comprenant un circuit UC3625. La carte électronique de puissance est disposée sur le moteur autour du moyeu pour entraîner en rotation la roue arrière 4. Le moteur 6 est alimenté par une batterie 7 par l'intermédiaire d'une unité centrale 8 (figure 1a), par exemple du type comprenant un circuit PIC 16F. Ce circuit de commande gère le transfert d'énergie de la batterie 7 à l'électronique de puissance embarquée, le boîtier de commande 9 présentant un certain nombre de touches 9a et de voyants 9b par lesquels l'unité centrale 8 et l'utilisateur du vélo (non représentés) peuvent communiquer, et tout autre composant électronique du vélo, tel que décrit par la suite. Selon la représentation purement illustrative de la figure 1, la batterie 7, l'unité centrale 8 et le boîtier de commande 9 peuvent par exemple être rassemblés dans un boîtier 20. L'unité centrale 8 est reliée au moteur électrique 6, à la batterie 7 et au boîtier de commande 9, de sorte qu'elle constitue le véritable "cerveau" du vélo à assistance électrique. Plutôt que d'intégrer le microprocesseur, de type PIC, ou autre processeur approprié, dans l'unité centrale 8, les inventeurs prévoient d'installer ce microprocesseur, formant un circuit électronique de commande 10, dans une carte à puce 11 du type classique, et d'installer dans l'unité centrale 8 un lecteur de carte à puce 8a également de type classique apte à faire communiquer le circuit électronique de commande 10 avec les autres composants 6, 7, 9 du véhicule 1. A ce titre, le circuit électronique de commande 10 peut, une fois inséré dans le lecteur, gérer les fonctions suivantes :
- communication avec le boîtier de commande 9, et en particulier, fonction marche/arrêt de l'assistance électrique, gestion de l'électronique des différents boutons et voyants du boîtier de commande 9 (affichage de la vitesse, de la consommation, commande de changement du niveau d'assistance, ...),
- commande de la batterie 7,
- fonction puissance permettant un transfert d'énergie depuis la batterie 7 vers le moteur 6, ou inversement, et
- gestion de capteurs du véhicule (état de charge de la batterie, vitesse du véhicule, etc...).

L'insertion de la carte à puce 11 dans le lecteur approprié permet en particulier de faire fonctionner le boîtier de commande 9 et l'électronique de commande du moteur 6, et donc de démarrer le vélo. A ce titre, le retrait de la carte à puce 11 du lecteur revient à verrouiller le moteur 6 et sert ainsi d'antivol.

Les circuits électroniques de la carte à puce 11 peuvent également contenir un premier circuit de mémoire 12. Le premier circuit de mémoire 12 peut par exemple contenir un code d'accès spécifique à la carte à puce 11. Ce code d'accès peut par exemple correspondre à une séquence d'appui sur les différents boutons 9a du boîtier de commande 9, à titre de sécurité supplémentaire. Quand l'utilisateur insère la carte à puce 11 dans l'unité centrale 8, le boîtier de commande 9 est démarré. L'actionnement successif des différentes touches 9a du boîtier de commande 9 par l'utilisateur est comparé au code contenu dans le premier circuit de mémoire 12 par le circuit électronique de commande 10. En cas d'identité entre le code entré et le code contenu dans le premier circuit de mémoire 12, le circuit électronique de commande 10 est autorisé à démarrer le moteur électrique 6. En cas d'erreur, un signal lumineux et/ou sonore peut être émis, et l'utilisateur peut être amené à réessayer un certain nombre de fois de rentrer un code correct avant le blocage complet du système et/ou l'émission d'une alarme.

Si l'utilisation d'une carte à puce 11 est utile pour un particulier détenant un véhicule à assistance électrique 1, par exemple à titre d'antivol, ou autre, l'invention permet également de rendre enfin possible l'installation et la gestion d'un parc de tels véhicules à assistance électrique. En effet, la carte à puce 11 a le double effet de pouvoir permettre une communication facile entre le vélo 1 et l'utilisateur d'une part, et d'autre part, entre le l'utilisateur et le gérant d'un tel parc de véhicules. A ce titre, le gérant dispose d'un parc de véhicules à assistance électrique tels que des vélos 1 représentés sur la figure 1, qu'il peut stocker dans un local 13 (figure 3). Il dispose éventuellement de plusieurs locaux en différents endroits d'un centre ville piétonnier, d'une université, d'un parc, d'un bord de mer, ou autre. Un certain nombre d'utilisateurs sont des utilisateurs abonnés du parc de véhicules, et détiennent chacun une carte personnelle 11 telle que représentée sur la figure 2. Le premier circuit de mémoire contient des informations relatives à l'utilisateur, tel qu'un code personnel d'utilisateur, qui peut être par exemple un numéro de Sécurité Sociale, ou autre. Quand l'utilisateur abonné souhaite utiliser un vélo, il se présente au local 13 et glisse sa carte 11 dans un lecteur 14 qui lit sur le premier circuit de mémoire 12 l'identité de l'utilisateur. L'utilisateur glisse sa carte personnelle 11 dans le vélo 1 qu'il souhaite utiliser, et peut également débloquer l'antivol en composant sa séquence de touche 9a personnelle. Avec un même code, l'utilisateur abonné peut donc utiliser n'importe quel vélo avec sa carte personnelle, ce qui simplifie grandement les opérations, comparé au cas traditionnel où chaque vélo possède un code antivol différent. A l'insertion de la carte 11 dans le vélo 1, le circuit électronique de commande 10 peut inscrire un certain nombre d'informations dans le premier circuit de mémoire 12, telles que par exemple la date et l'heure de début d'utilisation du véhicule. L'unité centrale 8 du vélo 1 peut également contenir un deuxième circuit de mémoire 15 qui peut contenir des informations relatives au véhicule tels que par exemple :
- date de mise en service du véhicule depuis la dernière révision,
- une énergie restante dans le véhicule, ou autre.

Les informations contenues dans le deuxième circuit de mémoire peuvent être copiées dans le premier circuit de mémoire contenu sur la carte à puce 11. Au cours de l'utilisation du véhicule 1, les données contenues dans le deuxième circuit de mémoire 15 évoluent et un certain nombre d'autres informations peut être mémorisé dans le deuxième circuit de mémoire, telles que par exemple :
- une quantité d'énergie consommée par l'assistance électrique depuis la mise en service du véhicule,
- une vitesse moyenne du véhicule depuis la mise en service,
- date et heure, ou autre.

Lorsque l'utilisateur cesse d'utiliser le véhicule 1, toutes les informations intéressantes sont copiées dans le premier circuit de mémoire 12 de la carte 11. Lorsqu'il remet le véhicule dans un local 13, pouvant être différent de celui où il a emprunté le véhicule, il glisse sa carte à puce 11 dans le lecteur 14 et celui-ci lit les informations pertinentes contenues dans le premier circuit de mémoire 12. Ces informations peuvent par exemple être relatives à l'identité de l'utilisateur, à l'identité du vélo utilisé, à la durée d'utilisation, à l'énergie consommée, à la vitesse moyenne, ou autre. En outre, un certain nombre d'unités (points) peuvent être retirés de la carte à puce 11 de l'utilisateur, par exemple de manière proportionnelle au temps d'utilisation. De manière instantanée ou périodique, les différentes informations sont transmises à un système organisateur 16 (figure 4) de la gestion du parc. Le gérant peut ainsi à tout moment suivre l'évolution de son parc. On prévoit ainsi, selon l'invention, un logiciel permettant au gérant de traiter les informations envoyées au système organisateur 16. A titre purement d'exemple, la figure 4 représente la sortie graphique d'un logiciel adapté représentant sur un écran de micro-ordinateur portable l'état d'un parc de six vélos à un moment donné. En sélectionnant les onglets V ou A en bas à gauche, le gérant peut choisir de visualiser des données relatives aux vélos ou aux personnes abonnées au service. A titre d'exemple, la figure 4 représente l'onglet V. Le parc se compose de six vélos V1,..., V6. Dans une première colonne (D), on représente le fait que le vélo en question est ou non disponible à l'utilisation. Par exemple, une croix en regard du vélo V4 désigne le fait que celui-ci n'est pas disponible actuellement, étant par exemple en réparation, ou autre.

Une deuxième colonne (E) représente par exemple l'énergie restant dans les batteries des différents vélos. Par exemple, un coup d'oeil rapide nous apprend que le plein d'énergie des vélos V5 et V6 a été fait récemment, et que la batterie du vélo V3 devrait être remplacée rapidement.

On peut imaginer d'autres colonnes utilisables dans le cadre de la gestion d'un tel parc, et par exemple, la colonne "V" représentant la vitesse moyenne à laquelle le vélo a été utilisé depuis sa mise en service.

Dans l'onglet "A" des abonnés du service, on peut avoir une représentation similaire des informations avec, par exemple, pour chaque utilisateur, sa consommation en temps, en énergie, son crédit restant, ou autre paramètre approprié.

L'utilisation de l'invention permet ainsi au gérant d'un parc de véhicules, en particulier de véhicules électriques, d'avoir directement accès aux informations relatives à son parc sans avoir à relever auprès de chaque véhicule les informations en question.

Pour contrôle, on pourrait éventuellement prévoir que les données présentes sur le deuxième circuit de mémoire contenu dans le vélo puissent être lisibles périodiquement directement sur chaque véhicule, par exemple lors d'opérations de maintenance, d'inventaire, etc.... Cette lecture peut être effectuée par un organe de transfert d'informations tel une carte à puce de contrôle. On peut prévoir que les informations contenues dans la carte 11 personnelle de chaque utilisateur peuvent également être copiées dans le deuxième circuit de mémoire propre au vélo, de sorte que celui-ci contienne également les informations d'utilisateurs successifs ayant utilisé le véhicule.

## Revendications

1. Véhicule électrique comprenant au moins un mécanisme électrique (6) contribuant au déplacement du véhicule et un circuit électronique de commande (10) adapté pour commander au moins ledit mécanisme électrique,
**caractérisé en ce que** ledit circuit électronique de commande (10) est amovible.

2. Véhicule selon la revendication 1, dans lequel ledit circuit électronique de commande (10) est porté par un dispositif électronique portatif (11) comportant en outre un premier circuit de mémoire (12) adapté pour stocker au moins une information relative audit véhicule et/ou à un utilisateur du véhicule.

3. Véhicule selon la revendication 2 comprenant en outre un deuxième circuit de mémoire (15) adapté pour contenir des informations relatives au véhicule.

4. Véhicule selon la revendication 3, dans lequel ledit circuit de commande (10) comprend des moyens d'inscrire dans le premier circuit de mémoire (12), au moins une information stockée dans le deuxième circuit de mémoire (15).

5. Véhicule selon l'une quelconque des revendications précédentes, dans lequel ledit véhicule comporte un antivol, ledit antivol étant verrouillé en l'absence du circuit de commande (10), et dans lequel le circuit de commande est adapté pour autoriser l'ouverture de l'antivol.

6. véhicule selon l'une quelconque des revendications précédentes, dans lequel ledit véhicule est un vélo pourvu d'un système d'assistance électrique.

7. Système de gestion d'un parc de véhicules électriques comprenant :
au moins un véhicule électrique (1) selon l'une quelconque des revendications 2 à 6,
au moins un dispositif électronique portatif (11) comprenant ledit circuit de commande (10) adapté pour commander ledit véhicule électrique (1) et ledit premier circuit de mémoire (12) adapté pour stocker au moins une information relative audit véhicule et/ou à un utilisateur du véhicule, et
un système organisateur (16) adapté pour lire ledit premier circuit de mémoire, et pour surveiller l'évolution dans le temps de ladite au moins une information.

8. Système de gestion selon la revendication 7, comprenant au moins un véhicule électrique selon la revendication 3, et comprenant en outre un organe de transfert adapté pour transférer des informations contenues dans ledit deuxième circuit de mémoire (15) vers ledit système organisateur (16).

9. Carte à puce (11) pour un véhicule selon l'une quelconque des revendications 1 à 6, portant ledit circuit de commande (10).

10. Procédé de gestion d'un parc de véhicules selon la revendication 8 comprenant les étapes au cours desquelles :
(a)on lit, à l'aide du système organisateur (16), une information relative à un utilisateur ou à un véhicule contenue dans ladite première mémoire (12), et
(b)on surveille au moins un paramètre lié audit véhicule ou audit utilisateur au cours du temps.

11. Programme d'ordinateur comprenant des portions de code de programme pour l'exécution d'au moins l'étape (b) du procédé selon la revendication 10 lorsque ledit programme est exécuté par un ordinateur.
